# EUROPEAN PATENT SPECIFICATION

(11) **EP 1 387 250 B1**
(45) Date of publication and mention of the grant of the patent: **13.07.2011**
(21) Application number: 03291917.7
(22) Date of filing: 30.07.2003
(51) Int. Cl.: G06F 9/30

(54) **Processor that accomodates multiple instruction sets and multiple decode modes**
Prozessor mit Mehrfachbefehlssätzen und Mehrfachdecodierungsmodi
Processeur à jeux d'instructions et à modes de decodage multiples

(43) Date of publication of application: 04.02.2004
(73) Proprietor: TEXAS INSTRUMENTS INC., Dallas, Texas 75251 (US); TEXAS INSTRUMENTS FRANCE, 06271 Villeneuve Loubet Cedex, Nice (FR)
(72) Inventor: Chauvel, Gerard, 06600 Antibes (FR); D'inverno, Dominique, 06270 Villeneuve-Loubet (FR); Lasserre, Serge, 83600 Fréjus (FR)
(74) Representative: Holt, Michael

(56) References cited:
- WO-A-99/18486
- GB-A- 2 358 261
- NEVILL: "Mobile Devices: RISC-Java blend powers cores" EETIMES, [Online] 23 July 2001 (2001-07-23), XP002461498 Retrieved from the Internet: URL:http://www.eetimes.com/showArticle.jht ml?articleID=16503207&printable=true> [retrieved on 2007-11-22]

## Description

The present invention relates generally to processors and more particularly to a processor capable of changing a decoder between modes according to multiple instruction set.

### BACKGROUND INFORMATION

Many types of electronic devices are battery operated and thus preferably consume as little power as possible. An example is a cellular telephone. Further, it may be desirable to implement various types of multimedia functionality in an electronic device such as a cell phone. Examples of multimedia functionality may include, without limitation, games, audio decoders, digital cameras, etc. It is thus desirable to implement such functionality in an electronic device in a way that, all else being equal, is fast, consumes as little power as possible and requires as little memory as possible. Improvements in this area are desirable.

United Kingdom Patent No. 2358261 describes an interpreter invocation mechanism for switching between execution of native instruction words and interpreted instruction words using a subroutine call instruction to start execution of the interpreter. The return address of the subroutine call instruction is used as an address pointer to the start of the interpreted code. The interpreted code may terminate with an Exit instruction whereupon normal native code execution resumes using the instruction at the immediately following memory address or alternatively with a Return instruction that recovers a return address previously stored to stack memory.

### BRIEF SUMMARY OF THE PREFERRED EMBODIMENTS

The invention resides in a processor and a method as set forth in the appended claims.

### NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...". Also, the term "couple" or "couples" is intended to mean either an indirect or direct connection. Thus, if a first device couples to a second device, that connection may be through a direct connection, or through an indirect connection via other devices and connections.

### BRIEF DESCRIPTION OF THE DRAWINGS

For a more detailed description of the preferred embodiments of the present invention, reference will now be made to the accompanying drawings, wherein:
Figure 1 shows a diagram of a system in accordance with preferred embodiments of the invention and including a Java Stack Machine ("JSM") and a Main Processor Unit ("MPU");
Figure 2 shows a block diagram of the JSM of Figure 1 in accordance with preferred embodiments of the invention;
Figure 3 shows various registers used in the JSM of Figures 1 and 2;
Figure 4 illustrates decoding an instruction in a first mode in parallel with pre-decoding a plurality of instructions; and
Figures 5 illustrates decoding in the second mode.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

The subject matter disclosed herein is directed to a programmable electronic device such as a processor. The processor described herein may be particularly suited for executing Java^{TM} Bytecodes, or comparable code. As is well known, Java is particularly suited for embedded applications and is a relatively "dense" language meaning that on average, each instruction may perform a large number of functions compared to many other programming languages. The dense nature of Java is of particular benefit for portable, battery-operated devices that preferably include as little memory as possible to save space and power. The reason, however, for executing Java code is not material to this disclosure or the claims that follow. The embodiment of the invention may be described in the context of Java but should not limit the execution of only Java instructions. The processor described herein may be used in a wide variety of electronic systems.

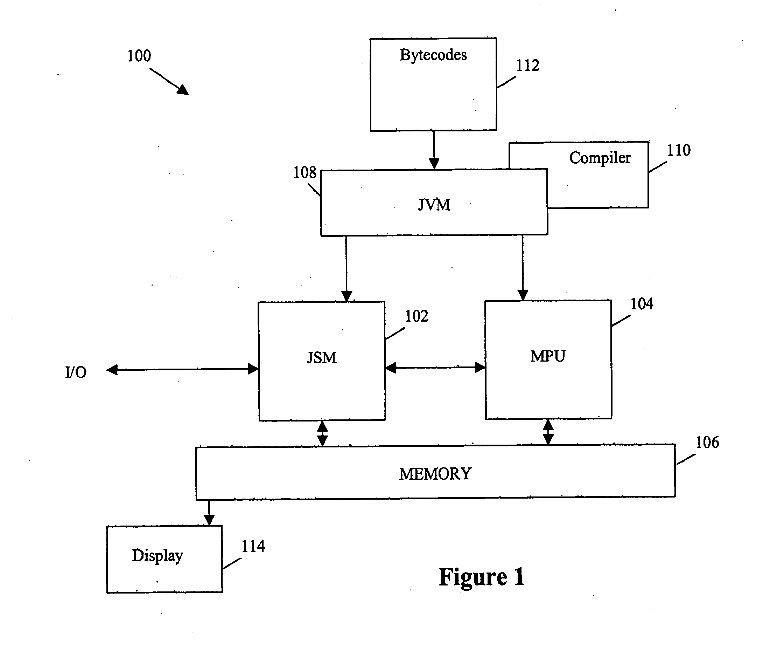

Referring now to Figure 1, a system 100 is shown in accordance with a preferred embodiment of the invention. As shown, the system includes at least two processors 102 and 104. Processor 102 is referred to for purposes of this disclosure as a Java Stack Machine ("JSM") and processor 104 may be referred to as a Main Processor Unit ("MPU"). System 100 may also include memory 106 coupled to both the JSM 102 and MPU 104 and thus accessible by both processors. At least a portion of the memory 106 may be shared by both processors meaning that both processors may access the same shared memory locations. Further, if desired, a portion of the memory 106 may be designated as private to one processor or the other. System 100 also includes a Java Virtual Machine ("JVM") 108, compiler 110, and a display 114. The JSM 102 preferably includes an interface to one or more input/output ("I/O") devices such as a keypad to permit a user to control various aspects of the system 100. In addition, data streams may be received from the I/O space into the JSM 102 to be processed by the JSM 102. Other components (not specifically shown) may be included as well.

As is generally well known, Java code comprises a plurality of "Bytecodes" 112. Bytecodes 112 may be provided to the JVM 108, compiled by compiler 110 and provided to the JSM 102 and/or MPU 104 for execution therein. In accordance with a preferred embodiment of the invention, the JSM 102 may execute at least some, and generally most, of the Java Bytecodes. When appropriate, however, the JSM 102 may request the MPU 104 to execute one or more Java Bytecodes not executed or executable by the JSM 102. In addition to executing Java Bytecodes, the MPU 104 also may execute non-Java instructions. The MPU 104 also hosts an operating system ("O/S") (not specifically shown), which performs various functions including system memory management, the system task management that schedules the JVM 108 and most or all other native tasks running on the system, management of the display 114, receiving input from input devices, etc. Without limitation, Java code may be used to perform any one of a variety of applications including multimedia, games or web-based applications in the system 100, while non-Java code, which may comprise the O/S and other native applications, may still run on the system on the MPU 104.

The JVM 108 generally comprises a combination of software and hardware. The software may include the compiler 110 and the hardware may include the JSM 102. The JVM may include a class loader, Bytecode verifier, garbage collector, and a Bytecode interpreter loop to interpret the Bytecodes that are not executed on the JSM processor 102.

In accordance with preferred embodiments of the invention, the JSM 102 may execute at least two instruction sets. One instruction set may comprise standard Java Bytecodes. As is well known, Java is a stack-based programming language in which instructions generally target a stack. For example, an integer add ("IADD") Java instruction pops two integers off the top of the stack, adds them together, and pushes the sum back on the stack. In general, the JSM 102 comprises a stack-based architecture with various features that accelerate the execution of stack-based Java code.

Another instruction set executed by the JSM 102 may include instructions other than standard Java instructions. In accordance with at least some embodiments of the invention, such other instruction set may include register-based and memory-based operations to be performed. This other instruction set generally complements the Java instruction set and, accordingly, may be referred to as a complementary instruction set architecture ("C-ISA") such as those instructions disclosed in one or more of the previously listed co-pending applications. By complementary, it is meant that at least some Java Bytecodes may be replaced by micro-sequences using C-ISA instructions that permit address calculation to readily "walk through" the JVM data structures. A micro-sequence may comprise one or more C-ISA instructions.

Further, such micro-sequences may also use Bytecode instructions. The execution of Java may be made more efficient and run faster by replacing some sequences of Bytecodes by preferably shorter and more efficient sequences of C-ISA instructions. The two sets of instructions may be used in a complementary fashion to obtain satisfactory code density and efficiency. As such, the JSM 102 generally comprises a stack-based architecture for efficient and accelerated execution of Java Bytecodes combined with a register-based architecture for executing register and memory based C-ISA instructions. Both architectures preferably are tightly combined and integrated through the C-ISA.

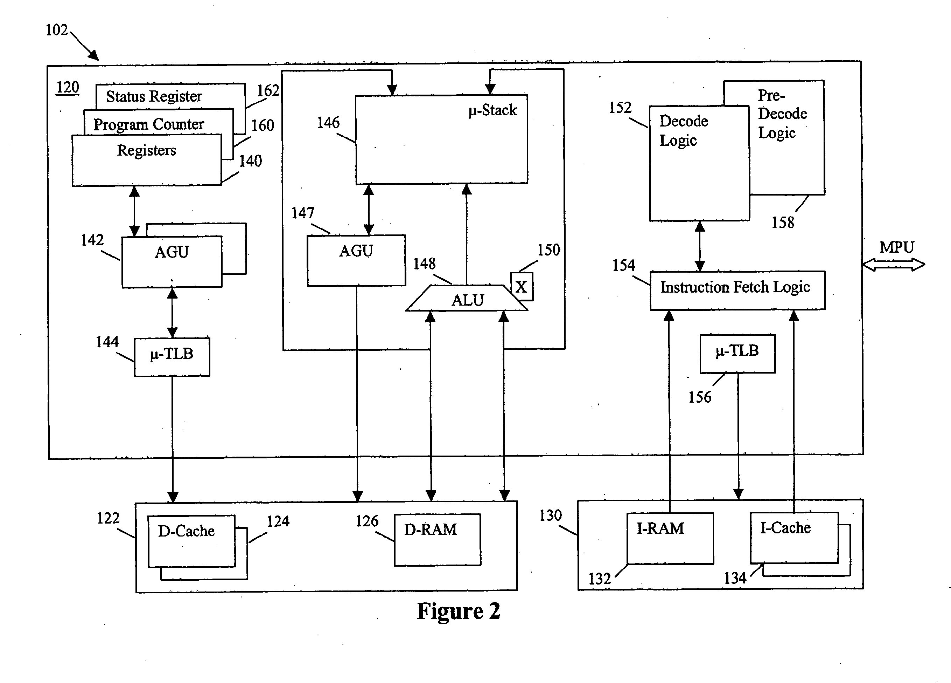

Figure 2 shows an exemplary block diagram of the JSM 102. As shown, the JSM includes a core 120 coupled to data storage 122 and instruction storage 130. The core may include one or more components as shown. Such components preferably include a plurality of registers 140, including a program counter 160 and a status register 162, three address generation units ("AGUs") 142, 147, micro-translation lookaside buffers (micro-TLBs) 144, 156, a multi-entry micro-stack 146, an arithmetic logic unit ("ALU") 148, a multiplier 150, decode logic 152, instruction fetch logic 154, and pre-decode logic 158. In general, operands may be retrieved from data storage 122 or from the micro-stack 146, processed by the ALU 148, while instructions may be fetched from instruction storage 130 by fetch logic 154, pre-decoded by pre-decode logic 158, and decoded by decode logic 152. The address generation unit 142 may be used to calculate addresses based, at least in part on data contained in the registers 140. The AGUs 142 may calculate addresses for C-ISA instructions as will be described below. The AGUs 142 may support parallel data accesses for C-ISA instructions that perform array or other types of processing. AGU 147 couples to the micro-stack 146 and may manage overflow and underflow conditions in the micro-stack preferably in parallel. The micro-TLBs 144, 156 generally perform the function of a cache for the address translation and memory protection information bits that are preferably under the control of the operating system running on the MPU 104. The decode logic 152 and the pre-decode logic 158 may be adapted to execute both the standard Java instructions as well as the C-ISA instructions of the system. The operation of the decode logic 152 and the pre-decode logic 158 will be described in more detail below.

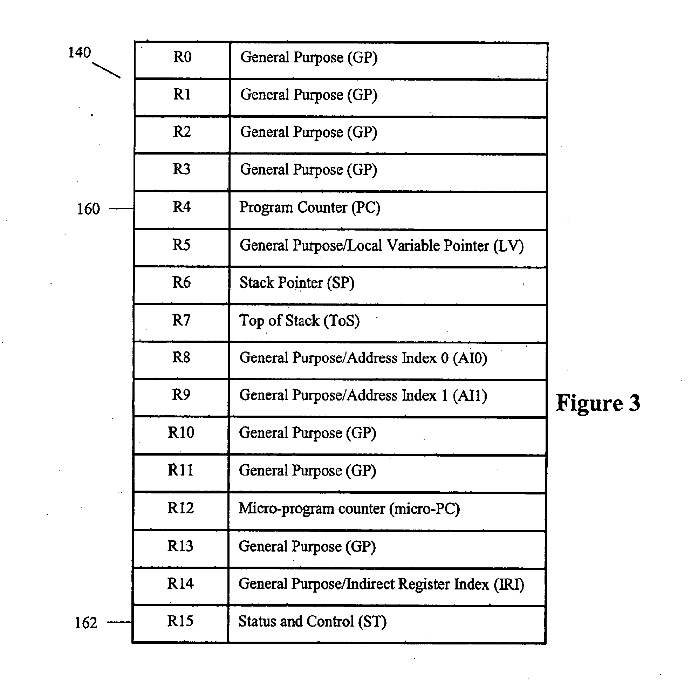

Referring now to Figure 3, the registers 140 may include 16 registers designated as R0-R15. Registers R0-R3, R5, R8-R1 and R13-R14 may be used as general purposes ("GP") registers usable for any purpose by the programmer. Other registers, and some of the GP registers, may be used for specific functions. For example, registers R4 and R12 may be used to store two program counters. Register R4 preferably is used to store the program counter ("PC") and register R12 preferably is used to store a micro-program counter ("micro-PC"). In addition to use as a GP register, register R5 may be used to store the base address of a portion of memory in which Java local variables may be stored when used by the current Java method. The top of the micro-stack 146 is referenced in registers R6 and R7. The top of the micro-stack has a matching address in external memory pointed to by register R6. The values contained in the micro-stack are the latest updated values, while their corresponding values in external memory may or may not be up to date. Register R7 provides the data value stored at the top of the micro-stack. Registers R8 and R9 may also be used to hold the address index 0 ("AI0") and address index 1 ("AI1"). Register R14 may also be used to hold the indirect register index ("IRI"). Register R15 may be used for status and control of the JSM 102. As an example, the status/control bit may indicate if the JSM 102 is executing a "simple" instruction or a "complex" instruction through a micro-sequence. This bit controls in particular, which program counter is used R4 (PC) or R12 (micro-PC) to fetch the next instruction. A "simple" Bytecode instruction is generally one in which the JSM 102 may perform an immediate operation either in a single cycle (e.g., an "iadd" instruction) or in several cycles (e.g., "dup2_x2"). A "complex" Bytecode instruction is one in which several memory accesses may be required to be made within the JVM data structures for various verifications (NULL pointer, array boundaries, etc.). In another example, the status/control bit may indicate if the JSM 102 is executing an instruction of a first instruction set, e.g., the standard Java instruction set, or executing an instruction of a second instruction set, e.g., the C-ISA instruction set. Because these data structures are generally JVM-dependent and thus may change from one JVM implementation to another, the software flexibility of the micro-sequence provides a mechanism for various JVM optimizations now known or later developed.

Referring again to Figure 2, as noted above, the JSM 102 may be adapted to process and execute instructions from at least two instruction sets. One instruction set includes stack-based operations and the second instruction set includes register-based and memory-based operations. The stack-based instruction set may include Java Bytecodes. Unless empty, Java Bytecodes pop data from and push data onto the micro-stack 146. The micro-stack 146 preferably comprises the top n entries of a larger stack that may be implemented in data storage 122. Although the value of n may be vary in different embodiments, in accordance with at least some embodiments, the size n of the micro-stack may be the top eight entries in the larger, memory-based stack. The micro-stack 146 preferably comprises a plurality of gates in the core 120 of the JSM 102. By implementing the micro-stack 146 in gates (e.g., registers) in the core 120 of the processor 102, access to the data contained in the micro-stack 146 is generally very fast, although any particular access speed is not a limitation on this disclosure.
The second, register-based, memory-based instruction set may comprise the C-ISA instruction set introduced above. The C-ISA instruction set preferably is complementary to the Java Bytecode instruction set in that the C-ISA instructions may be used to accelerate or otherwise enhance the execution of Java Bytecodes.

The ALU 148 adds, subtracts, and shifts data. The multiplier 150 may be used to multiply two values together in one or more cycles. The instruction fetch logic 154 generally fetches instructions from instruction storage 130. The instructions first may be pre-decoded by the pre-decode logic by 158 and then decoded by decode logic 152. Because the JSM 102 may be adapted to process instructions from at least two instruction sets, the decode logic 152 generally comprises at least two modes of operation, one mode for each instruction set. In particular, the decode logic unit 152 may include a "Java" mode in which Java instructions may be decoded and a "C-ISA" mode in which C-ISA instructions may be decoded. Of course, the modes depend on the particular instruction sets implemented which may be different from the instrument sets described herein. While decoding instructions from one instruction set in the corresponding mode, the decoding mode may be changed "temporarily" to permit a single instruction from the other opposite instruction set to be executed in the mode that corresponds to the other instruction set. The opposite instruction set instruction may be preceded by a byte such as the Java "Impdep1" byte to cause the temporary mode switches. In addition, the decoding mode may be changed "permanently" to permit a plurality of instructions from the opposite instruction set to be executed in the mode set that corresponds to the opposite instruction set. Such an instruction may be preceded by a byte such as a prefix. The prefix may be one or more implementation defined Java bytes, e.g., the Java "Impdep1" byte. The pre-decode logic 158 determines if an instruction is preceded by such bytes and consider this byte as an instruction prefix, as will be discussed below.

The data storage 122 generally comprises data cache ("D-cache") 124 and data random access memory ("D-RAMset") 126. Reference may be made to copending applications U.S. Serial Nos. 09/591,537 filed June 9, 2000 (atty docket TI-29884), 09/591,656 filed June 9, 2000 (atty docket TI-29960), and 09/932,794 filed August 17, 2001 (atty docket TI-31351). The stack (excluding the micro-stack 146), arrays and non-critical data may be stored in the D-cache 124, while Java local variables, critical data and non-Java variables (e.g., C, C++) may be stored in D-RAM 126. The instruction storage 130 may comprise instruction RAM ("I-RAM") 132 and instruction cache ("I-cache") 134. The I-RAMset 132 may be used for "complex" micro-sequenced Bytecodes or other "micro-sequences or critical sequences of codes," as will be described below. The I-cache 134 may be used to store other types of Java Bytecode and mixed Java/CISA instructions.

In accordance with the preferred embodiments, the decode logic may be capable of decoding instructions in two modes. The first mode is for instructions of a first instruction set, e.g. standard Java instruction set. The decode logic 152 may also decode instructions from a second instruction set, e.g., C-ISA, in a second mode. In order to ensure the appropriate decode mode for the decoding of instructions, the pre-decode logic 158 may pre-decode the instructions prior to loading the instructions in the decode logic 152. In particular, the pre-decode logic may pre-decode for instructions defined by the implementation that indicates the mode the decode logic should operate in for at least a succeeding instruction.

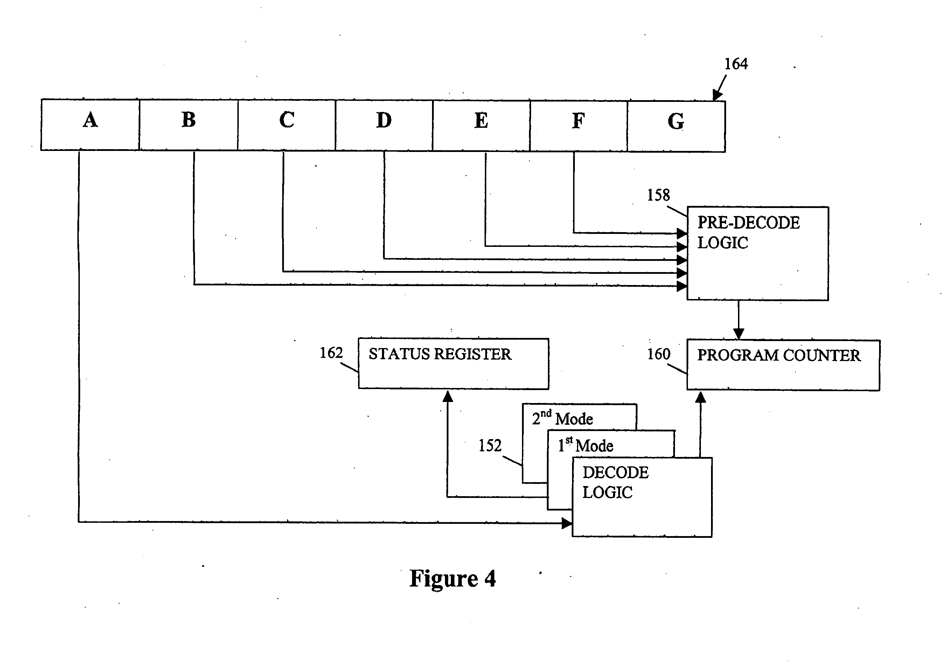

Referring to Figure 4, a portion of a program may include a plurality of bytes 164 (labeled as bytes "A" through "G"). In Java, these bytes may be called "Bytecodes." Therefore, for simplicity, these bytes may be referred as Bytecodes in both instruction sets. One or more of those bytes form a Java instruction. The Java instruction set, therefore, may include variable length instructions. In C-ISA, the instruction length also may vary in length (e.g., 2 to 4 bytes) and, like the Java instructions, the length may only be determined by the decode logic 152. In accordance with the preferred embodiments, while the decode logic 152 is decoding Bytecode A of an instruction in first mode, where Bytecode A may be all or a portion of the instruction, the next five Bytecodes preferably are provided to pre-decode logic 158 for pre-decoding. As illustrated, Bytecodes B through F are pre-decoded by the pre-decode logic 158 in parallel with the decoding of Bytecode A.

In a preferred embodiment, each of the first and second instruction sets includes an instruction that causes the decode logic 152 to switch temporarily from one mode to another for only one instruction. In particular, both the first and second instruction sets may include a Java reserved code such as the "Impdep1" Bytecode. Upon detecting the Java Impdepl Bytecode, the decode logic 152 switches to the other decode mode to decode the one instruction belonging to the instruction set that follows the Java Impdep1 instruction. For example, if the decode logic is operating in the first mode and the Java Impdep1 instruction is detected, the decode logic switches from the first mode to the second mode to decode the one instruction from the second instruction set that follows the Java Impdep1 instruction. Similarly, if the decode logic is operating in the second mode and the Java Impdep1 instruction is detected, the decode logic switches from the second mode to the first mode to decode the one instruction from the first instruction set that follows the Java Impdep1 instruction.

Referring still to Figure 4, Bytecode A belongs to a first instruction set, e.g., a Java instruction. In order to determine the mode in which the decode logic 152 may operate for a next instruction, the pre-decode logic 158 preferably determines if any of Bytecodes B through F comprises a predetermined instruction indicating at least one succeeding instruction following Bytecode A belongs to the second instruction set, e.g., an instruction from the C-ISA set. The predetermined instruction may be a prefix to the succeeding instruction. A prefix, as used herein, is a Bytecode that indicates the type of instruction that follows the prefix. For example, a prefix (e.g., Impdep1) may be used as a prefix and may indicate that the instruction following the Impdep1 instruction belongs to a different instruction set. As such, by first determining if an instruction belongs to a particular instruction set, the decode logic 152 may caused to adjust the decoding mode for decoding the instruction. Therefore, if the pre-decode logic 158 determines that Bytecode B is a Java Impdep1 instruction and the length of the currently decoded instruction is one byte corresponding the Bytecode A, the decode logic 152 may be caused to skip the decoding of Bytecode B and switch from the first mode to the second mode to decode Bytecode C, where Bytecode C may be all or a portion of an instruction. After the decoding of the succeeding instruction that may include Bytecode C, the decode logic 152 switches back to the first mode. As such, the Java Impdepl instruction may temporarily switch the decode logic from the first mode to the second mode to decode one instruction from the second instruction set and may switch back to the first mode after the decoding process of that instruction.

Similarly, the decode logic 152 may decode Bytecode A, where Bytecode A belongs to the second instruction set. Concurrently with the decode logic decoding Bytecode A in the second mode, the pre-decode logic 158 may determine that Bytecode B, out of Bytecode B through F, is a Java Impdep1 instruction. The decode logic switches from the second mode to the first mode to decode Bytecode C and may switch back to the second mode after the complete decoding of the instruction that includes Bytecode C.
In a preferred embodiment, the decode logic 152 may be decoding a current instruction in the appropriate mode. A program counter 160 may be used to point to that current instruction. Concurrently, the pre-decode logic may determine a Java Impdepl instruction indicating that a following instruction belongs to another instruction set. A program counter calculation logic (not specifically shown) may increment the program counter 162 to skip the Java Impdep1 instruction and point directly to the following instruction such that the decode logic 152 does not decode the Java Impdep1 instruction. Thus, by pre-decoding predetermined instructions indicating an instruction set belonging to another set prior to loading such instruction into the decode logic 152, the decode logic 152 may decode an instruction from another instruction set in the appropriate mode without a time penalty. In the preferred embodiment, these predetermined instructions may be the same for both instruction sets as described above. In another embodiment each instruction set might have a specific instruction that is pre-decoded to switch to the other mode for the following instruction, as described below.

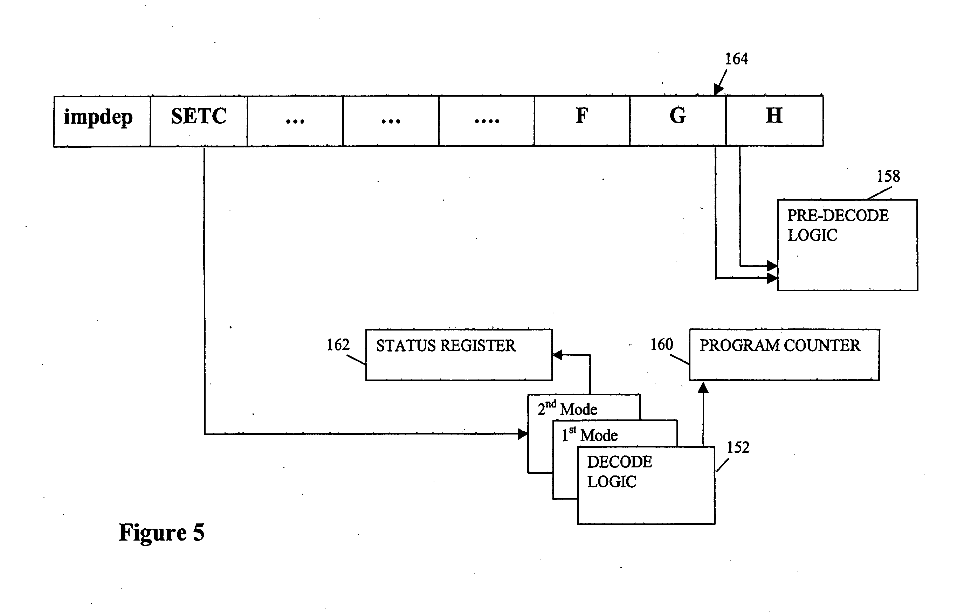

In a preferred embodiment, the second instruction set may include an instruction that may permanently switch the decode logic 152 from the first mode to the second mode. In particular, the second instruction set may include a "SetC" instruction that indicates that a set of instructions, e.g., a set of C-ISA instructions, may follow. In the preferred embodiments, the SetC instruction follows a Java Impdep1 instruction belonging to the first instruction set. Assuming, the decode logic 152 is operating in a first mode, upon detection of the Java Impdep1 instruction, the decode logic 152 temporarily switches from the first mode to the second mode for decoding the following instruction, which is the SetC instruction. Upon detection of the SetC instruction, the decode logic 152 is set to permanently decode in the second mode. For example, referring to Figure 4, the decode logic 152 is decoding Bytecode A, which may belong to a first instruction set, e.g., the Java instruction set, in a first mode. In parallel with the decode logic decoding Bytecode A, the pre-decode logic 158 may determine if at least one of the five subsequent Bytecodes, Bytecodes B through F, include a predetermined instruction. In one example, the pre-decode logic 158 determines that Bytecode B is a Java Impdep1 instruction and that Bytecode C is a SetC instruction. Referring now to Figure 5, upon determining that Bytecode C is a SetC instruction, the decode mode remains in the second mode and begins decoding the instructions after the SetC instruction in the second mode.

The second instruction set may also include an instruction that permanently switches from the decode logic from the second mode to the first mode. In particular, the second instruction set may include a "SetJ" instruction indicating that a set of instructions, e.g., a set of Java instructions, may follow. Upon detection of the SetJ instruction, the decode logic 152 permanently switches from the second mode (which may be used for decoding C-ISA instructions) to the first mode (which may be used for decoding Java bytecodes). The decode logic remains in the first mode until a Java Impdepl instruction is detected.

In a preferred embodiment, the decode logic may also remain in the second mode upon detecting a predetermined instruction by the pre-decode logic 158. In particular, the pre-decode logic 158 may detect a Java Impdep1 instruction belonging to the second instruction set, and may cause the decode logic 152 to switch temporarily to the first mode for the one instruction following the Java Impdep1 instruction. Upon completion of the decoding process in the first mode for the one instruction following the Java Impdep1 instruction, the decode logic 152 switches back to the second mode.

In some embodiments, the Java instruction set may include two Java implementation dependent and reserved codes, e.g., Impdep1 and Impdep2, for temporary and permanent decode mode switches. For example, Imdep1 may be used to switch to the second mode for one instruction and Impdep2 may be used to permanently switch to the second mode. As such, if the decode logic is decoding a Java instruction in the first mode, upon detecting either the Impdep1 or Impdep2 instruction, the decode logic switches to the second mode. Similarly, the C-ISA may include a pair of codes for temporary and permanent decode mode switches.

By pre-decoding for a predetermined instruction that indicates that at least a following instruction belongs to another instruction set, the decode logic 152 may switch to the appropriate mode to decode the following instruction. Furthermore, by pre-decoding for the predetermined instruction in parallel with the decoding process, the predetermined instruction need not be loaded into the decode logic 152 and thus, improve the cycle time of decoding instructions from two different instruction set.

While the preferred embodiments of the present invention have been shown and described, modifications thereof can be made by one skilled in the art without departing from the spirit and teachings of the invention. The embodiments described herein are exemplary only, and are not intended to be limiting. Many variations and modifications of the invention disclosed herein are possible and are within the scope of the invention. Accordingly, the scope of protection is not limited by the description set out above. Each and every claim is incorporated into the specification as an embodiment of the present invention.

## Claims

1. A processor (102), comprising:
decode logic (152) adapted to decode instructions from a first instruction set in a first decoding mode (Java mode) and adapted to decode instructions from a second instruction set in a decoding second mode (C-ISA mode), wherein the decode logic (152) is adapted to switch from one mode to the other;
pre-decode logic (158) coupled to the decode logic (152) and arranged to pre-decode a predetermined number of succeeding instructions in parallel with the decoding of a current instruction by the decode logic (152);
wherein the decode logic is arranged, on detection of a first predetermined instruction (Impdep1) by the pre-decode logic (158), to switch decoding mode for the next succeeding instruction only, and, on detection of a second predetermined instruction (SetJ, SetC, Impdep2) by the pre-decode logic (158); to switch decoding mode for a plurality of succeeding instructions until a subsequent detection by pre-decode logic (158) of the first (Impdep1) or second (Inpdep2) predetermined instruction.

2. The processor of claim 1, wherein the second predetermined instruction (SetJ, SetC) immediately succeeds the first predetermined instruction (Impdep1).

3. The processor of claims 1 or 2, wherein the first (Impdep1) and second (SetJ, SetC, Impdep2) predetermined instructions comprise one or more implementation defined Java bytes.

4. The processor of any of claims 1 to 3, wherein the first (Impdep1) and second (SetJ, SetC, Impdep2) predetermined instructions belong to the first instruction set.

5. The processor of any of claims 1 to 3, wherein the first (Impdep1) and second (SetJ, SetC, Impdep2) predetermined instructions belong to the second instruction set.

6. A method of decoding instructions from a first and second instruction sets, comprising:
decoding instructions from the first instruction set in a first decoding mode (Java mode) and decoding instructions from a second instruction set in a second decoding mode (C-ISA mode);
pre-decoding a predetermined number of succeeding instructions, in parallel with the decoding of a current instruction;
switching from one decoding mode (Java mode/C-ISA mode) to the other decoding mode(C-ISA mode/Java mode) for the next succeeding instruction only, on detection of a first predetermined instruction (Impdep1) during pre-decoding; and
switching from one decoding mode (Java mode/C-ISA mode) to the other decoding mode(C-ISA mode/Java mode) for a plurality of succeeding instructions on detection of a second predetermined instruction (SetJ, SetC, Impdep2) during pre-decoding, until a subsequent detection of the first (Impdep1) or second (Inpdep2) predetermined instruction.

7. The method of claim 6, further comprising
switching from one decoding mode (Java mode/C-ISA mode) to the other decoding mode(C-ISA mode/Java mode) for a plurality of succeeding instructions on detection of a second predetermined instruction (SetJ, SetC) immediately succeeding the first predetermined instruction (Impdep1).

8. The method of claim 6 or 7, wherein the first (Impdep1) and second (SetJ, SetC, Impdep2) predetermined instructions comprise one or more implementation defined Java bytes.

9. The method of claim 6, 7 or 8, wherein the first (Impdep1) and second (SetJ, SetC, Impdep2) predetermined instruction belong to the first instruction set.

10. The method of any of claims 6 to 9, wherein the first (Impdep1) and second (SetJ, SetC, Impdep2) predetermined instructions belong to the second instruction set.

## Patentansprüche

1. Prozessor (102), umfassend:
eine Dekodierlogik (152), die in einem ersten Dekodiermodus (Java mode) dazu eingerichtet ist, Befehle eines ersten Befehlssatzes zu dekodieren, und die dazu eingerichtet ist, in einem zweiten Dekodiermodus (C-ISA mode) Befehle eines zweiten Befehlssatzes zu dekodieren, wobei die Dekodierlogik (152) dazu eingerichtet ist, von einem Modus in den anderen umzuschalten,
eine Vor-Dekodierlogik (158), die mit der Dekodierlogik (152) gekoppelt und dazu eingerichtet ist, parallel zu einer Dekodierung eines gegenwärtigen Befehls durch die Dekodierlogik (152) eine vorbestimmte Anzahl von aufeinanderfolgenden Befehlen vorzudekodieren,
wobei die Dekodierlogik dazu ausgelegt ist, bei Detektion eines ersten vorbestimmten Befehls (Impdep1) durch die Vor-Dekodierlogik (158) den Dekodiermodus nur für den nächstfolgenden Befehl umzuschalten, und bei Detektion eines zweiten vorbestimmten Befehls (SetJ, SetC, Impdep2) durch die Vor-Dekodierlogik (158) den Dekodiermodus für eine Vielzahl von aufeinanderfolgenden Befehlen umzuschalten, bis eine darauffolgende Detektion des ersten (Impdep1) oder zweiten (Impdep2) vorbestimmten Befehls durch die Vor-Dekodierlogik (158) erfolgt.

2. Prozessor nach Anspruch 1, wobei der zweite vorbestimmte Befehl (SetJ, SetC) unmittelbar auf den ersten vorbestimmten Befehl (Impdep1) folgt.

3. Prozessor nach Anspruch 1 oder 2, wobei der erste (Impdep1) und der zweite (SetJ, SetC, Impdep2) vorbestimmte Befehl ein oder mehrere durch die Implementierung definierte Java-Bytes umfasst.

4. Prozessor nach einem der Ansprüche 1 bis 3, wobei der erste (Impdep1) und zweite (SetJ, SetC, Impdep2) vorbestimmte Befehl zu dem ersten Befehlssatz gehören.

5. Prozessor nach einem der Ansprüche 1 bis 3, wobei der erste (Impdep1) und zweite (SetJ, SetC, Impdep2) vorbestimmte Befehl zu dem zweiten Befehlssatz gehören.

6. Verfahren zur Dekodierung von Befehlen eines ersten und zweiten Befehlssatzes, umfassend:
Dekodieren von Befehlen aus einem ersten Befehlssatz in einem ersten Dekodiermodus (Java mode) und Dekodieren von Befehlen aus einem zweiten Befehlssatz in einem zweiten Dekodiermodus (C-ISA mode),
Vor-Dekodieren einer vorbestimmten Anzahl von aufeinander folgenden Befehlen, parallel zur Dekodierung eines gegenwärtigen Befehls,
Umschalten von einem Dekodiermodus (Java mode/C-ISA mode) in einen anderen Dekodiermodus (C-ISA mode/Java mode) für den nächstfolgenden Befehl, wenn ein erster vorbestimmter Befehl (Impdep1) während der Dekodierung detektiert wird, und
Umschalten von einem Dekodiermodus (Java mode/C-ISA mode) in einen anderen Dekodiermodus (C-ISA mode/Java mode) für eine Vielzahl von aufeinander folgenden Befehlen, wenn ein zweiter vorbestimmter Befehl (SetJ, SetC, Impdep2) während der Vor-Dekodierung detektiert wird, solange bis der erste (impdep1) oder der zweite (impdep2) vorbestimmte Befehl detektiert wird.

7. Verfahren nach Anspruch 6, außerdem umfassend:
Umschalten von einem Dekodiermodus (Java mode/C-ISA mode) in einen anderen Dekodiermodus (C-ISA mode/Java mode) für eine Vielzahl von aufeinander folgenden Befehlen, wenn ein zweiter vorbestimmter Befehl (SetJ, SetC) detektiert wird, der unmittelbar auf den ersten vorbestimmten Befehl (Impdep1) folgt.

8. Verfahren nach Anspruch 6 oder 7, wobei der erste (Impdep1) und zweite (SetJ, SetC, Impdep2) vorbestimmte Befehl ein oder mehrere durch die Implementierung definierte Java-Bytes umfasst.

9. Verfahren nach Anspruch 6, 7 oder 8, wobei der erste (Impdep1) und zweite (SetJ, SetC, Impdep2) vorbestimmte Befehl zu dem ersten Befehlssatz gehören.

10. Verfahren nach einem der Ansprüche 6 bis 9, wobei der erste (Impdep1) und zweite (SetJ, SetC, Impdep2) vorbestimmte Befehl zu dem zweiten Befehlssatz gehören.

## Revendications

1. Processeur (102), comprenant :
une logique de décodage (152) adaptée de façon à décoder des instructions qui proviennent d'un premier jeu d'instructions dans un premier mode de décodage (mode Java) et adaptée de façon à décoder des instructions qui proviennent d'un second jeu d'instructions dans un second mode de décodage (mode C - ISA), dans lequel la logique de décodage (152) est à même de commuter d'un mode à l'autre ;
une logique de prédécodage (158) couplée à la logique de décodage (152) et agencée de façon à prédécoder un nombre prédéterminé d'instructions qui se succèdent, parallèlement au décodage d'une instruction en cours par la logique de décodage (152) ;
dans lequel la logique de décodage est agencée, lors de la détection d'une première instruction prédéterminée (Impdep1) par la logique de prédécodage (158), pour commuter le mode de décodage seulement pour la prochaine instruction suivante, et, lors de la détection d'une deuxième instruction prédéterminée (SetJ, SetC, Impdep2) par la logique de prédécodage (158), pour commuter le mode de décodage pour une pluralité d'instructions qui se succèdent jusqu'à une détection ultérieure par la logique de prédécodage (158) de la première (Impdep1) ou de la deuxième (Inpdep2) instruction prédéterminée.

2. Processeur selon la revendication 1, dans lequel la deuxième instruction prédéterminée (SetJ, SetC) succède immédiatement à la première instruction prédéterminée (Impdep1).

3. Processeur selon la revendication 1 ou la revendication 2, dans lequel les première (Impdep1) et deuxième (SetJ, SetC, Impdep2) instructions prédéterminées comprennent un ou plusieurs octets Java définis par l'implémentation.

4. Processeur selon l'une quelconque des revendications 1 à 3, dans lequel les première (Impdep1) et deuxième (SetJ, SetC, Impdep2) instructions prédéterminées appartiennent au premier jeu d'instructions.

5. Processeur selon l'une quelconque des revendications 1 à 3, dans lequel les première (Impdep1) et deuxième (SetJ, SetC, Impdep2) instructions prédéterminées appartiennent au second jeu d'instructions.

6. Procédé de décodage d'instructions provenant d'un premier et d'un second jeux d'instructions, comprenant les étapes consistant à :
décoder des instructions qui proviennent du premier jeu d'instructions dans un premier mode de décodage (mode Java) et décoder des instructions qui proviennent d'un second jeu d'instructions dans un second mode de décodage (mode C - ISA) ;
prédécoder un nombre prédéterminé d'instructions qui se succèdent, parallèlement au décodage d'une instruction en cours ;
commuter d'un mode de décodage (mode Java / mode C - ISA) vers l'autre mode de décodage (mode C - ISA / mode Java) seulement pour la prochaine instruction suivante, lors de la détection d'une première instruction prédéterminée (Impdep1) au cours du prédécodage ; et
commuter d'un mode de décodage (mode Java / mode C - ISA) vers l'autre mode de décodage (mode C - ISA / mode Java) pour une pluralité d'instructions qui se succèdent lors de la détection d'une deuxième instruction prédéterminée (SetJ, SetC, Impdep2) au cours du prédécodage, jusqu'à une détection ultérieure de la première (Impdep1) ou de la deuxième (Impdep2) instruction prédéterminée.

7. Procédé selon la revendication 6, comprenant en outre une commutation d'un mode de décodage (mode Java / mode C - ISA) vers l'autre mode de décodage (mode C - ISA / mode Java) pour une pluralité d'instructions qui se succèdent lors de la détection d'une deuxième instruction prédéterminée (SetJ, SetC) qui suit immédiatement la première instruction prédéterminée (Impdep1).

8. Procédé selon la revendication 6 ou la revendication 7, dans lequel les première (Impdep1) et deuxième (SetJ, SetC, Impdep2) instructions prédéterminées comprennent un ou plusieurs octets Java définis par l'implémentation.

9. Procédé selon l'une quelconque des revendications 6, 7 ou 8, dans lequel les première (Impdep1) et deuxième (SetJ, SetC, Impdep2) instructions prédéterminées appartiennent au premier jeu d'instructions.

10. Procédé selon l'une quelconque des revendications 6 à 9, dans lequel les première (Impdep1) et deuxième (SetJ, SetC, Impdep2) instructions prédéterminées appartiennent au second jeu d'instructions.
